# EUROPEAN PATENT APPLICATION

(11) **EP 4 797 081 A1**
(43) Date of publication of application: **26.08.2026**
(21) Application number: 25813727.2
(22) Date of filing: 23.05.2025
(51) Int. Cl.: G06F 8/76

(54) **ROBOT OPERATING SYSTEM, ROBOT CROSS-PLATFORM DEVELOPMENT ARCHITECTURES, AND ROBOT CROSS-PLATFORM DEVELOPMENT METHOD**

(30) Priority: 14.08.2024 CN 202411113068
(71) Applicant: Yaoshi Robotics (Shanghai) Co., Ltd., Shanghai 201306 (CN); Shanghai Sage Intelligent Technology Co., Ltd., Shanghai 201109 (CN)
(72) Inventor: WEI, Kun, Pudong New Area, Shanghai 201306 (CN); ZHANG, Jianzheng, Pudong New Area, Shanghai 201306 (CN); ZOU, Jinpei, Pudong New Area, Shanghai 201306 (CN); DONG, Yi, Pudong New Area, Shanghai 201306 (CN)
(74) Representative: Monteiro Alves, Inês
(86) International application number: PCT/CN2025/096738
(87) International publication number: WO 2026/036832

(57) **Abstract**

The present invention provides a robot operating system and a cross-platform development architecture and development method, applied in the technology field of artificial intelligence and robotics. Through module conversion, it encapsulates and adapts the task module provided in the first robot operating system into the general task interface of the second robot operating system, realizing cross-platform seamless integration and operation. Accordingly, consistent operation of the same set of algorithm code on different robot operating system platforms is achieved. This avoids repetitive development for different operating systems, saves development time and resources, enhances universality and portability of modules, improves compatibility and scalability among different operating system platforms, and provides flexibility and efficiency for the development of robot technology.

## Description

### TECHNICAL FIELD

The present invention relates to the technical field of robot operating systems, and particularly relates to a robot operating system, and a cross-platform development architecture and a development method.

### BACKGROUND ART

With continuous advancement of science and technology, mobile robots have been increasingly applied in multiple important fields such as civil and industrial applications.

A mobile robot is a complex integrated system combining mechanical, electrical, control, and perception technologies. Its core controller is mostly based on an industrial control computer hardware platform, on which a robot-dedicated operating system is installed. Various software algorithms developed for robot control, perception, and computational decision-making operate on the operating system to finally complete control and operation of the robot. It can thus be seen that the operating system plays a core and fundamental role in a robot control platform.

In practical applications, even for the same algorithm performing the same motion, when operation on different operating systems is required, developers have to repeatedly perform targeted development for different operating system platforms, resulting in a waste of development resources and time.

Based on this, there is a need for a new development architecture capable of supporting operation of the same algorithm on different robot operating system platforms.

### SUMMARY

In view of this, embodiments of the present invention provide a robot operating system, and a cross-platform development architecture and a development method, applied to the field of artificial intelligence and robot technology. By developing a module conversion toolkit, a task module developed on a first robot operating system platform is converted into a new module capable of being compatibly operated on a second robot operating system platform. The conversion process involves standardized encapsulation and interface adaptation, ensuring consistency of algorithm code, so that the same set of code can operate on different robot operating systems. Moreover, by means of a general task interface, the task module converted through the conversion module toolkit can operate seamlessly on the second robot operating system platform, thereby avoiding repetitive development work for different operating systems. This improves the universality and reusability of modules, effectively saves development time and resources, and enhances compatibility and scalability among different operating system platforms.

The embodiments of the present invention provide the following technical solutions.

A robot cross-platform development architecture is provided by the embodiments of the present invention, and it is applied to one side of a first robot operating system. The robot cross-platform development architecture includes: a task module provided in the first robot operating system; the task module includes a series of standardized API components; and the series of standardized API components are configured for, according to a kernel function of the task module, exporting algorithm software designed by a user as a plurality of corresponding standardized APIs, wherein each of the standardized APIs is configured to be correspondingly embedded into a corresponding function layer in a conversion module, so as to be encapsulated through the conversion module into API data capable of being used by a general task interface in a second robot operating system.

Further, a robot cross-platform development architecture is provided by the embodiments of the present invention. The robot cross-platform development architecture includes: a conversion module, wherein the conversion module includes a plurality of first function layers and a first API layer, each of the first function layers is configured for embedding a corresponding standardized API to encapsulate the standardized API; the standardized API is an API exported by the task module of the first robot operating system according to the kernel function based on algorithm software designed by the user; and the first API layer is configured for docking each encapsulated standardized API with a general task interface, wherein the general task interface is located in the second robot operating system and is provided with a second API layer for docking, and the second API layer is correspondingly provided with the first API layer.

Further, a robot cross-platform development architecture is provided by the embodiments of the present invention, and it is applied to a second robot operating system. The robot cross-platform development architecture includes: a general task interface provided in the second robot operating system, and the general task interface includes a second API layer and a plurality of second function layers; the second API layer is correspondingly provided with a first API layer of a conversion module and is configured for acquiring corresponding descriptive data content from the corresponding first API layer; and the plurality of second function layers are configured for forming, based on the descriptive data content, application interfaces and function implementations corresponding to a kernel in the second robot operating system.

Further, a robot cross-platform development architecture is provided by the embodiments of the present invention. The architecture includes a task module, a conversion module, and a general task interface.

The task module is provided in a first robot operating system and includes a series of standardized API components; the series of standardized API components are configured for, according to kernel functions of the task module, exporting algorithm software designed by a user as a plurality of corresponding standardized APIs; and each of the standardized APIs is configured to be correspondingly embedded into a corresponding function layer in the conversion module.

The conversion module includes a plurality of first function layers and a first API layer, wherein the plurality of first function layers are configured for embedding the corresponding standardized APIs to encapsulate kernel functions of the task module and the standardized APIs, and the first API layer is configured for docking each encapsulated standardized API with a corresponding second API layer in the general task interface.

The general task interface is provided in a second robot operating system and includes a second API layer and a plurality of second function layers, wherein the second API layer is correspondingly provided with the first API layer and is configured for acquiring corresponding data content from the encapsulated standardized APIs; and the plurality of second function layers are configured for forming, based on the data content, application interfaces and function implementations corresponding to the second robot operating system.

Further, a robot cross-platform development method is provided by the embodiments of the present invention, including:
acquiring an algorithm software designed by a user, wherein the algorithm software is an algorithm software based on a first robot operating system for implementing robot motion control;
exporting corresponding first data from the algorithm software through any one of the robot cross-platform development architectures above;
converting the first data into corresponding second data through any one of the robot cross-platform development architectures above; and
importing the second data into a general task interface in any one of the robot cross-platform development architectures above, so that the algorithm software operates in a second robot operating system.

Embodiments of the present invention further provide a robot operating system, including: the task module in any one of the robot cross-platform development architectures above, or the general task interface in any one of the robot cross-platform development architectures above.

Preferably, the robot operating system further includes: the conversion module in any one of the robot cross-platform development architectures above.

Compared with the prior art, at least one of the above technical solutions adopted by the embodiments of the present invention is capable of achieving at least the following beneficial effects.

The present invention, through module conversion, encapsulates the task module provided in the first robot operating system and then adapts it into the general task interface of the second robot operating system, realizing cross-platform seamless integration and operation. Accordingly, consistent operation of the same set of algorithm code on different robot operating system platforms is achieved. This avoids repetitive development for different operating systems, saves development time and resources, enhances universality and portability of modules at the same time, improves compatibility and scalability among different operating system platforms, and provides flexibility and efficiency for the development of robot technology.

In addition, the module development and design of the present invention follow a set of standardized API design rules. This provides standardized interfaces for the module application on other platforms, promotes development and standardization of the module core content, and significantly improves development efficiency and code reusability. Real-time performance and consistency across different operating system platforms are ensured. System flexibility, scalability, and maintenance convenience are enhanced, thus effectively reducing maintenance costs.

### BRIEF DESCRIPTION OF DRAWINGS

In order to more clearly illustrate the technical solutions of the embodiments of the present invention, the drawings used in the embodiments are briefly introduced below. It is apparent that the drawings described below are merely some embodiments of the present invention, and those of ordinary skill in the art can obtain other drawings based on these drawings without inventive efforts.
FIG. 1 is a schematic diagram of a robot cross-platform development architecture in the present invention;
FIG. 2 is a diagram showing a series of standardized API components exported from a task module in the present invention;
FIG. 3 is a schematic diagram of an internal logic implementation of the task module in the present invention;
FIG. 4 is a schematic diagram showing a relationship between the task module and a module converter in the present invention;
FIG. 5 is a schematic diagram showing a relationship between a new module and a general task interface module in the present invention;
FIG. 6 is a diagram showing a corresponding relationship between a first API layer of a conversion module and a second API layer of a general task interface in the present invention; and
FIG. 7 is an architecture diagram of the task module in the present invention.

### DETAILED DESCRIPTION OF EMBODIMENTS

The embodiments of the present invention are described in detail below with reference to the drawings.

The embodiments of the present invention are described below through specific concrete examples, and those skilled in the art can easily understand other advantages and effects of the present invention based on the contents disclosed in the present invention. Obviously, the described embodiments are only a part of the embodiments of the present invention, and not all of them. The present invention can also be implemented or applied through other different specific embodiments, and various modifications or changes can be made to the details in the present invention based on different viewpoints and applications without departing from the spirit of the present invention. It needs to be noted that, when there is no conflict, the following embodiments and the features in the embodiments can be combined with each other. Based on the embodiments in the present invention, all other embodiments obtained by those of ordinary skill in the art without making inventive efforts are within the scope of protection of the present invention.

It is to be noted that the various aspects of the embodiments described below fall within the scope of the appended claims. It should be apparent that the aspects described herein can be embodied in a wide variety of forms, and any specific structure and/or function described herein are merely illustrative. Based on the present invention, those skilled in the art should understand that one aspect described herein can be implemented independently of any other aspect, and two or more of these aspects can be combined in various ways. For example, any number and aspects described herein can be used to implement the device and/or practice the method. In addition, the device can be implemented and/or the method can be practiced by using other structures and/or functionalities except one or more of the aspects described herein.

It should also be noted that the drawings provided in the following embodiments merely illustrate the basic concept of the present invention in a schematic manner. The drawings only show components related to the present invention and are not drawn according to the number, shape, and size of actual components. The shape, quantity, and proportion of each component in actual implementation can be changed arbitrarily, and the component layout form may also be more complicated.

In addition, specific details are provided in the following description to facilitate a thorough understanding of the examples. However, those skilled in the art will understand that the embodiments can be practiced without these specific details.

A core controller of a mobile robot is based on an industrial control computer hardware platform, and a robot-dedicated operating system is installed on the platform. These operating systems support the operation of key algorithms such as control, perception, and decision-making, thereby ensuring precise operation and functional realization of the robot.

At present, there exist various types of robot operating systems in the industry, such as the robot operating system (ROS) developed by Google in the United States. However, due to the particularities of different operating systems, even when a robot executes the same task algorithm (such as motion operation or sensor algorithm), it cannot directly operate across different robot operating systems. Therefore, the same task algorithm needs to be separately and repetitively developed for different robot operating system platforms, which prevents direct cross-platform application. It is thus necessary to first address cross-platform compatibility and interoperability among different robot operating systems.

For example, along with the development of robot technology and related ecosystem fields, different enterprises may select operating systems suitable for their own according to their product characteristics. Even within the same enterprise, different operating systems may be adopted for different product types or series to maximize respective advantages. The ROS system, for instance, is well known for its extensive user ecosystem and open-source nature and is currently one of the most widely used robot operating systems. However, since different robot operating systems have their own characteristics, developers are required to perform robot application task development for different operating system platforms, and to repeatedly develop numerous modules with identical functions. This increases development difficulty for developers, makes subsequent maintenance and updating more difficult, and raises costs.

In view of this, through in-depth analysis of robot operating systems and exploratory improvement for cross-operating-system applications, it is found that robot operating systems generally can provide API interfaces, which facilitate developers in realizing respective task designs based on the APIs. Therefore, if the API interface provided by the robot operating system can be utilized and the interface can be improved and designed accordingly, it is possible that the same task algorithm software developed for a first operating system can, after API conversion, operate on two robot operating systems to complete the same task algorithm, thereby eliminating the need for developers to repeatedly develop two sets of task algorithms for two different operating systems.

In the process of implementing the improvement idea, it is further found that performing cross-platform only between two robot operating systems still has considerable limitations. Specifically, the above improvement solution requires targeted improvement of the API interface function of the operating system once the robot operating system is replaced, which still increases repeated development work. Therefore, if a modular translation function can be additionally provided inside or outside the robot operating system, the same task algorithm can be quickly and flexibly adapted to operate on different robot operating systems through module conversion.

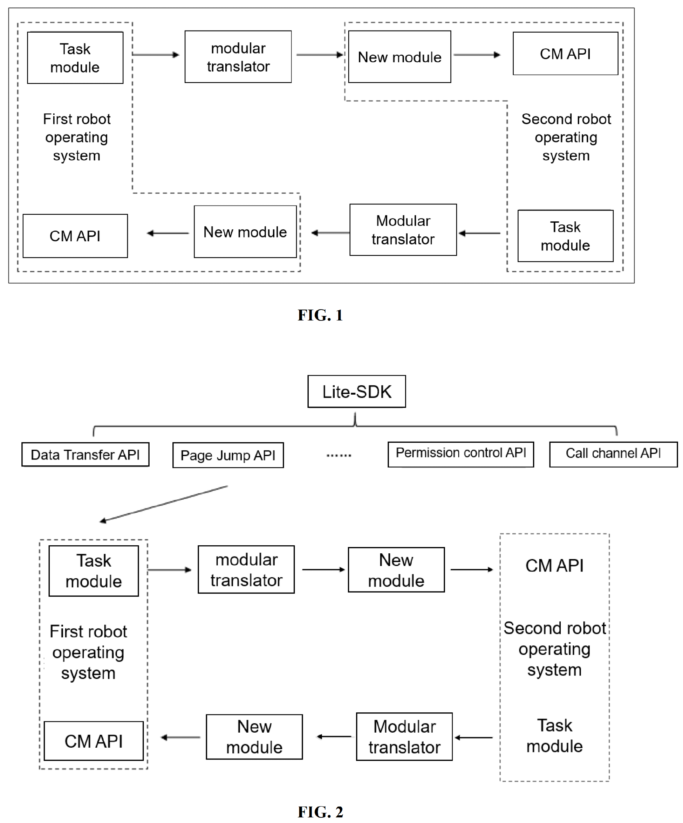

Based on this, embodiments of the present invention provide a robot cross-platform development architecture. The overall concept is that, as shown in FIG. 1, the algorithm software developed on the first robot operating system platform is still developed in the form of a task, and it only needs to generate a series of standardized APIs based on a task module. These standardized APIs are then converted into algorithm modules usable on a second robot operating system platform. The conversion module can serve as a toolkit, that is, the "modular translator" in the figure, for converting the standardized APIs formed by the task module. For example, the input and output interfaces, instruction calling attributes, and parameters of the code kernel in the task module can be standardized, encapsulated, and converted into interfaces and resource calling patterns usable on the second robot operating system platform. This realizes cross-platform seamless integration and operation, and accordingly, consistent operation of the same set of algorithm codes on different robot operating system platforms is achieved. It avoids repetitive development for different operating systems, saves development time and resources, enhances the universality and portability of modules at the same time, and provides flexibility and efficiency for the development of robot technology.

With reference to the drawings, the technical solutions provided in embodiments of the present invention are described as follows.

As shown in FIG. 1 and FIG. 2, a robot cross-platform development architecture is provided by the embodiments of the present invention, and it is applied to one side of a first robot operating system. The robot cross-platform development architecture includes: a task module provided in the first robot operating system; the task module includes a series of standardized API components; and the series of standardized API components are configured for, according to a kernel function of the task module, exporting algorithm software designed by a user as a plurality of corresponding standardized APIs, wherein each of the standardized APIs is configured to be correspondingly embedded into a corresponding function layer in a conversion module, so as to be encapsulated through the conversion module into API data usable by a general task interface in a second robot operating system.

Specifically, referring to FIG. 1, taking a first robot operating system platform and a second robot operating system platform (for example, two different robot operating systems such as SAGE-OS and ROS) as an example for illustration.

The algorithm software developed on the first robot operating system platform is developed in the form of a task module. The module is converted by a module conversion toolkit (hereinafter referred to as module conversion) into an algorithm module usable on the second robot operating system platform. The module conversion toolkit, namely the "modular translator" shown in the figure, performs conversion on the task module, that is, the input and output interfaces, instruction calling attributes, and parameters of the code kernel in the task module are standardized, encapsulated, and converted to become interfaces and resource calling patterns usable on other operating system platforms. The generated new module is referred to as a "new module".

In FIG. 1, the CM API on the second robot operating system platform is a general task interface developed based on the platform, wherein the interface is configured for docking with algorithm modules of any other third-party operating system platform.

The general task interface is connected with the generated "new module", and can perform data interaction, instruction calling, and task execution functions of the new module on the second robot operating system platform.

Ultimately, the task module (a set of source codes) developed on the first robot operating system platform can be applied to the second robot operating system platform, thereby avoiding repetitive development on two operating system platforms.

Conversely, the task module developed on the second robot operating system platform can be applied to the first robot operating system platform after corresponding conversion by the "modular translator".

As shown in FIG. 2, when developing a task module or an algorithm module on the first robot operating system platform, the task module or the algorithm module exports a Lite-SDK plug-in. The plug-in is composed of a series of standardized API components. Each standardized API in the task module is correspondingly embedded into respective functional layers in the modular translator, realizing adaptive encapsulation of the kernel function and API of the task module, and ensuring that these APIs can be effectively used in the general task interface of the second operating system. Therefore, the cross-platform compatibility and functionality can be realized.

In an embodiment, the task module further includes a logic determination unit and a register unit; and the logic determination unit is configured for, before the series of standardized API components export the standardized APIs, determining a type of an API currently being called, and placing the called API into the register unit, so that the kernel performs internal matching based on the APIs stored in the register and executes a corresponding API content call.

Specifically, in the design of the task module, two key components are included: a logic determination unit and a register unit. The function of the logic determination unit is to identify and determine the type of API currently being called before a series of standardized API components are exported. Once the type of the API is identified, the logic determination unit stores the API information into the register unit. Subsequently, the kernel of the task module reads the stored API information from the register unit and performs internal matching to determine and execute the corresponding API content call, thereby ensuring that the module kernel can efficiently and accurately respond to external requests and execute corresponding operations.

In an embodiment, the task module further includes a numbering unit. The numbering unit is configured for numbering each API to be exported, so as to mark a priority level of the API through the numbering, wherein the priority level is divided into a high priority level and a low priority level, the high priority level marks API calls sensitive to real-time performance and having high real-time requirements, and the low priority level marks API calls having low real-time requirements. The logic determination unit, after determining the type of the API, places a number corresponding to the API into the register unit, so that the kernel performs internal matching through the number in the register.

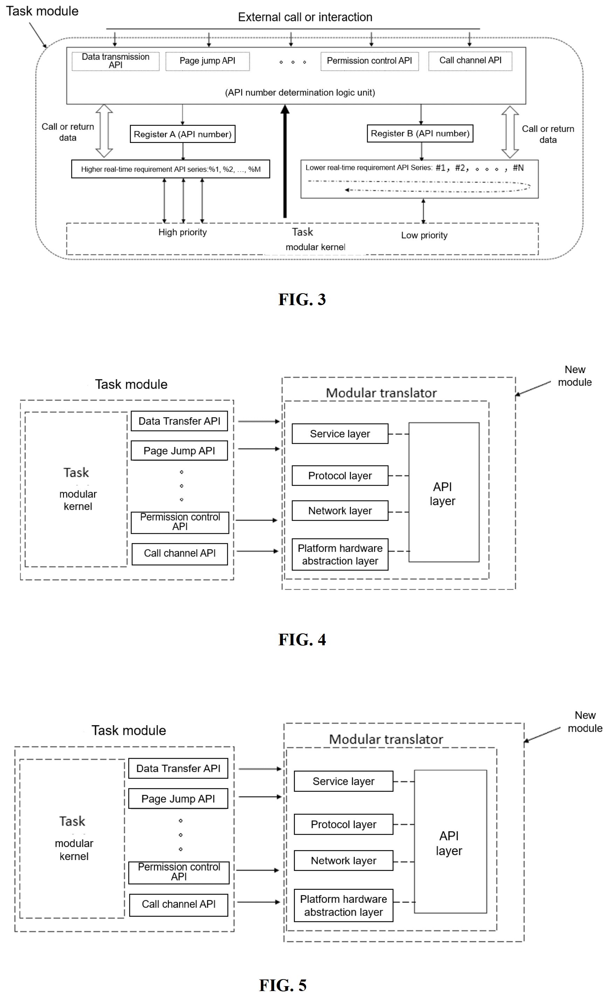

Specifically, as shown in FIG. 3, when the code of the task module or the algorithm module is running, execution is performed based on the data and functional logic framework provided by these APIs. Each task module or algorithm module (hereinafter referred to as module) internally includes a task "kernel", and a series of standardized API interfaces are exported by the task kernel. Inside the module, each exported API is numbered and they are divided into two groups: high-priority and low-priority. As the name implies, the high-priority API has the right to be executed first and is applicable to API calls that are sensitive to real-time performance and have high real-time requirements. The low-priority API is applicable to calls with low real-time requirements. After the logic determination unit determines the type of the API, the corresponding API number is placed into the register unit, so that the kernel performs internal matching through the number in the register.

In an embodiment, the register unit includes a first register group and a second register group. The first register group is configured for storing numbers of APIs with high priority level, and the second register group is configured for storing numbers of APIs with low priority level. When the first register group stores numbers of APIs with high priority level, an interrupt mode is used to trigger the kernel to preferentially perform internal matching processing; and when the second register group stores numbers of APIs with low priority level, the kernel performs internal matching processing in a query mode.

Specifically, in the design of the task module, the register unit includes a first register group and a second register group. When the task module receives an external call or interacts with the outside, the API numbering determination logic unit in the module kernel determines the type of the API currently being called, identifies the corresponding number, and then places the number into the first register group or the second register group.

The kernel performs internal matching according to the API number stored in the register, thereby executing the corresponding API content call. The API with a high-priority number will be executed first, similar to an interrupt mechanism. The API with a low-priority number will be executed in a query mode, and when an API number is matched, the kernel executes the corresponding call.

The implementation mechanism of the task module or algorithm module in the above embodiment has the following main advantages.
1. The real-time property of the module is embodied.

Because mobile operation robots are applied in industrial sites and need to achieve high synchronization with the production rhythm of the production line, higher requirements are usually put forward for the real-time performance of the robot. The real-time performance of internal software and algorithms is the fundamental guarantee for realizing the overall real-time performance of the robot. Therefore, from the perspective of the underlying logic and kernel operation mechanism of the task module or the algorithm module, the above mechanism realizes the real-time property of the module; it abandons the traditional module development process in which a module is developed either as an independent real-time module or as a non-real-time module according to demand. The above mechanism realizes the unification of real-time and non-real-time performance within the same module.

2. A standardized API logic architecture is implemented inside the module, which facilitates the development of the core content of the module and the standardized development of the module.

The kernel mechanism of the module in the above embodiment solidifies the API logic architecture of the module, making it applicable to modular development of any task type or algorithm type. Developers only need to focus their development efforts on the kernel development of module content, without concern for how to develop the API interface or logic implementation of a specific module, which is more conducive to standardized development work and improves the development efficiency and output of developers.

3. A standardized interface is provided for the application of the module on other platforms.

The API logic of the module in the above embodiment provides a unified and standardized external interface and internal implementation mechanism for the module. According to the different requirements of external platforms, it is easier to realize data interaction with external platforms based on the API, which is a standardized API interface.

In an embodiment, the plurality of standardized APIs include at least one or more of the following APIs: data transmission API, page jump API, authority control API, and call channel API.

Specifically, as shown in FIG. 2, when developing a task module or an algorithm module on the first robot operating system platform, the task module or the algorithm module exports a Lite-SDK plug-in. The plug-in is composed of a series of standardized API components, including at least one or more of the following APIs: data transmission API, page jumping API, permission control API, and call channel API. The function of the series of standardized APIs is to provide interfaces and bridges with the outside according to the requirements of the task module for operation data, function invocation, and control logic. Therefore, after the module is converted by the modular translator, it can be more easily adapted to and run on different operating system platforms.

In an embodiment, the first robot operating system includes a SAGE-OS robot operating system.

Further, a robot cross-platform development architecture is provided by the embodiments of the present invention. The robot cross-platform development architecture includes: a conversion module, wherein the conversion module includes a plurality of first function layers and a first API layer, each of the first function layers is configured for embedding a corresponding standardized API to encapsulate the standardized API; the standardized API is an API exported by the task module of the first robot operating system according to the kernel function based on algorithm software designed by the user; and the first API layer is configured for docking each encapsulated standardized API with a general task interface, wherein the general task interface is located in the second robot operating system and is provided with a second API layer for docking, and the second API layer is correspondingly provided with the first API layer.

Specifically, as shown in FIG. 4, the robot cross-platform development architecture includes a conversion module, which is responsible for converting the task module developed on the first robot operating system into a module capable of running on the second robot operating system.

In the implementation, each first functional layer of the conversion module is responsible for embedding and encapsulating the standardized APIs from the task module of the first robot operating system. These standardized APIs are exported according to the kernel function of the task module and represent the interfaces of the algorithm software designed by the user. The encapsulated standardized APIs are further interfaced with the general task interface in the second robot operating system through the first API layer.

The general task interface is provided with a second API layer, which corresponds to the first API layer and ensures compatibility and functionality in the second operating system. Through this hierarchical and modular encapsulation and interfacing mechanism, the conversion module enables the task module originally designed for the first operating system to run seamlessly on the second operating system, realizing cross-platform code reuse and functional adaptation. This improves development efficiency, avoids repetitive development for different operating systems, saves development time and resources, and enhances the universality and portability of modules.

Therefore, the modular translator is essentially an intermediate tool, through which a task module developed on one platform can be converted into a task module applicable to other platforms. In simple terms, it is an "encapsulation" tool that provides the original module with a "shell", through which other platforms can perform data interaction with the module.

In an embodiment, the first API layer interacts and docks with the general task interface in a data stack manner.

Specifically, the first API layer defines a plurality of data stacks, which are responsible for processing data from the task module and communicating with the general task interface according to predetermined protocols and formats.

When the task module needs to perform data exchange or request services from the second operating system, the relevant data are first sent to the data stacks of the first API layer. The data stacks process the data according to preset rules and protocols, such as data packaging, encryption, and protocol conversion, to ensure that the data can be correctly interpreted by the target operating system. The processed data are then transmitted to the general task interface through the API layer.

In the second API layer of the general task interface, the received data are parsed, decrypted, and converted to ensure that the data can be correctly executed in the second operating system. Through the interaction of the data stacks, the security and accuracy of data transmission are guaranteed, the efficiency of data exchange is improved, and efficient communication and seamless integration of task modules between different operating system platforms are achieved.

In an embodiment, the first API layer includes one or more data stacks for data interaction: a data channel stack, an interaction protocol stack, a network protocol stack, and a hardware abstraction stack.

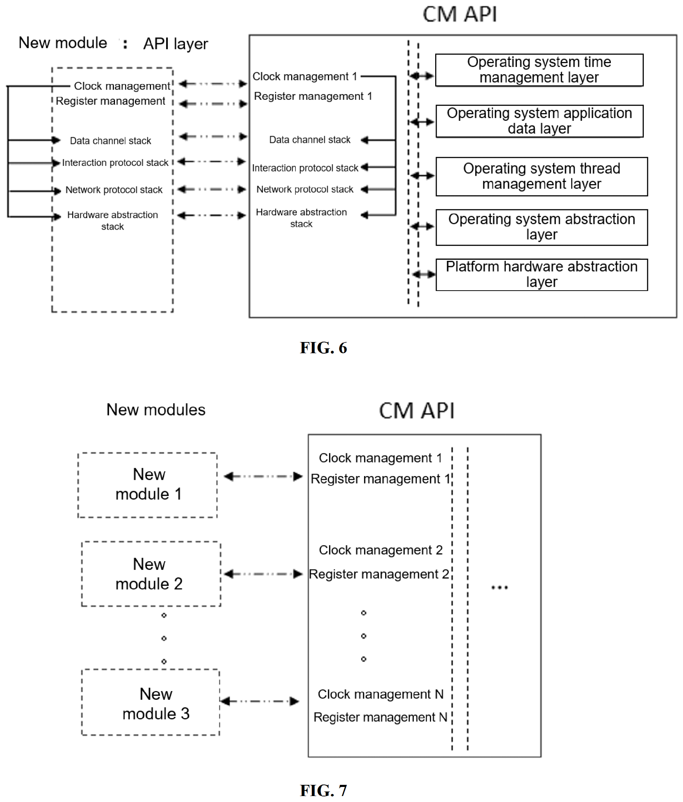

Specifically, as shown in FIG. 6, the first API layer includes one or more data stacks for data interaction: a data channel stack, an interaction protocol stack, a network protocol stack, and a hardware abstraction stack.

Correspondingly, in the second API layer of the general task interface, one or more data stacks for data interaction are also included, corresponding to those in the first API layer.

In an embodiment, the plurality of first function layers include:
a platform abstraction layer, configured for abstractly describing a hardware platform on which the second robot operating system is located;
a network layer, configured for describing a network protocol stack for data exchange;
a protocol layer, configured for describing interaction network protocols related to the second robot operating system;
a service layer, configured as a data channel, wherein
each of the first function layers is configured for correspondingly embedding one of corresponding standardized APIs, to realize kernel functions of the task module and adaptive encapsulation of the APIs, so that each of the standardized APIs is represented as data of a corresponding function layer based on data interaction.

Specifically, as shown in FIG. 4, the relationship between the task module and the modular translator is illustrated: the series of APIs of the task module serve as interfaces and bridges to external functional information blocks.

In the modular translator, the overall architecture is designed with four first functional layers and one API layer. The four first functional layers are as follows.

Platform abstraction layer: an abstraction layer related to the hardware platform of the operating system to which the conversion is performed.

Network layer: network protocol stack.

Protocol layer: interaction network protocols related to the platform to which the conversion is performed.

Service layer: data channels, instruction invocation, and so on.

API layer: the API for interfacing with the operating system of the platform to which conversion is performed.

Each API in the task module is correspondingly embedded into the respective functional layers in the modular translator, realizing adaptive encapsulation of the task modular kernel function and API. Ultimately, the modular translator provides, in the form of an API layer, an interface for the converted operating system platform, thus enabling the original task module to perform data interaction and communication with the new operating system platform.

Essentially, the modular conversion of the task module converts the control APIs in the task module into a module based on a data-interaction network layer architecture and prepares a corresponding API layer for interfacing with different operating system platforms. This ensures that the APIs of the task module maintain their functionality and performance in the new operating system environment, achieving cross-platform compatibility and portability.

In an embodiment, the conversion module further includes a clock management unit and a register management unit, the clock management unit is configured for unifying a clock pace of docking between the first API layer and the general task interface, and the register management unit is configured for, under control of the clock management unit, completing bidirectional transmission of docking between the first API layer and the general task interface.

Specifically, the clock management unit synchronizes the clock pace between the first API layer and the general task interface, ensuring that both sides maintain a consistent time reference during data interaction, thereby avoiding data synchronization issues caused by clock discrepancies. Under the unified scheduling of the clock management unit, the register management unit is responsible for performing the bidirectional data transmission tasks between the first API layer and the general task interface. Through read and write operations of the registers, rapid access and transfer of data are realized, ensuring the real-time performance and accuracy of data interaction, thereby guaranteeing compatibility and stable data interaction between different operating system platforms.

In the general task interface (CM API), each execution layer of the platform operating system performs fetching and placing of data packets from the "stacks" of the CM API according to specified protocols, and the new module calls resources of the new platform via "stack"-to-"stack" content interaction on both sides.

The reading or writing of the "stacks" on both sides is completed under the unified clock pace to achieve corresponding bidirectional transmission, ultimately accomplishing the goal of data interaction.

This "stack"-to-"stack" read and write operation, under the rule of "synchronized pace", ensures the real-time performance of data interaction and guarantees accuracy, and the efficiency of data exchange is improved at the same time.

Further, a robot cross-platform development architecture is provided by the embodiments of the present invention, and it is applied to a second robot operating system. The robot cross-platform development architecture includes: a general task interface provided in the second robot operating system, and the general task interface includes a second API layer and a plurality of second function layers; the second API layer is correspondingly provided with a first API layer of a conversion module and is configured for acquiring corresponding descriptive data content from the corresponding first API layer; and the plurality of second function layers are configured for forming, based on the descriptive data content, application interfaces and function implementations corresponding to a kernel in the second robot operating system.

Specifically, as shown in FIG. 5, the general task interface provided in the second robot operating system includes a second API layer and a plurality of second functional layers.

The second API layer corresponds to the first API layer in the conversion module, receiving and obtaining the corresponding descriptive data content from the first API layer. This data content, encapsulated by the conversion module, contains all information and instructions required by the task module, thereby achieving cross-platform functionality.

In an embodiment, the plurality of second function layers include:
an operating system time management layer, configured for acquiring time data of the current operating system and for managing time data of the first API layer in the conversion module;
an operating system application data layer, configured for interacting, at runtime, with application data corresponding to the first API layer in the conversion module;
an operating system thread management layer, configured for performing a thread management function corresponding to execution and invocation of the first API layer in the conversion module;
an operating system abstraction layer, configured for registering functions of the operating system layer into a corresponding first API layer of the conversion module, so that the corresponding first API layer of the conversion module is able to access the second robot operating system and kernel resources of the second robot operating system; and
a platform hardware abstraction layer, configured for adapting the corresponding first API layer of the conversion module to a hardware platform of the second robot operating system.

Specifically, as shown in FIG. 5, the new module, generated by converting the task module through the modular conversion, interacts with the CM (common mode) API interface of the new operating system platform through a unified API layer, enabling operation on that operating system platform.

The CM API layer of the operating system includes a plurality of second functional layers. For example, these second functional layers include: an operating system time management layer, which is configured for acquiring the current system time data and interfacing with the new module; an operating system application data layer, which is configured for performing runtime application data interaction with the new module; an operating system thread management layer, which is configured for executing a thread management function during execution and invocation of the new module; an operating system abstraction layer, which is configured for registering functions of the operating system layer to the new module, allowing the new module to access the operating system and operating system kernel resources through this layer; and a platform hardware abstraction layer, which is configured for adapting the new module to the hardware platform of the new operating system.

Therefore, the CM API is essentially an interface module layer developed according to the new platform, which is specifically used to interface with the new module and to realize adaptive application interfaces and functional implementation of the new module on the operating system platform.

In an embodiment, the general task interface (CM API) can interface with any number of "new modules". That is, any module developed on other platforms, after being converted by the modular translator into a new module, needs to interface with the CM API. It can be said that the CM API serves as the entry point for modules converted from other platforms to run on this platform. Modules developed directly on this platform do not require access through the CM API.

In an embodiment, the general task interface further includes a general clock management unit, configured for performing clock management control on all module calling tasks by adopting a queued clock management manner; and/or
the general task interface further includes a dedicated clock management unit, configured for performing clock management control on module calling tasks with high priority requirement, high real-time requirement, or large data flow data interaction volume by adopting a dedicated clock management manner, and performing clock management control on module calling tasks with low priority or low data flow data interaction volume by adopting a queued clock management manner.

Specifically, as shown in FIG. 7, within the CM API framework, each clock management unit and register management unit has its own independent "stack" (array) to improve the operational efficiency of each module's application. In this case, overall efficiency is maximized (parallel mode), but more platform resources are occupied.

Alternatively, two or more modules can share a "stack," in which case the clock management of the two or more modules is configured in sequential clock mode, also called "queued" clock mode, completing data interactions one by one. In this case, it saves platform resources but slightly reduces overall efficiency, and is suitable for module calls with lower real-time requirements.

Module call priority can also be dynamically configured. For module calls with higher priority requirements, higher real-time requirements, or larger volumes of data interaction, a dedicated or individual clock management mode is used. For module calls with lower priority or smaller volumes of data interaction, a queued clock management mode is adopted. On platforms with abundant resources, the dedicated or individual clock management can be used more extensively.

On platforms with limited resources, the queued clock management mode can be used.

It should be noted that the dynamic configuration mechanism provides convenience for system expansion, allowing the system to flexibly adjust the clock management mode according to the current operational status and task requirements, thereby adapting to different operating conditions and environmental changes. Newly added modules can flexibly integrate into the existing clock management framework according to their characteristics and requirements.

In an embodiment, different clock management units are used for different task modules. As shown in FIG. 7, a clock management unit is labeled as "Clock management 1". For the CM API, there can be multiple clock management units, such as Clock management 2, Clock management 3, and so on, with each clock management unit corresponding to a module converted from an external platform.

Similarly, the register management units are configured in the same manner.

In an embodiment, the second robot operating system includes a ROS robot operating system.

Further, a robot cross-platform development architecture is provided by the embodiments of the present invention, and it includes a task module, a conversion module, and a general task interface.

The task module is provided in a first robot operating system and includes a series of standardized API components; the series of standardized API components are configured for, according to kernel functions of the task module, exporting algorithm software designed by a user as a plurality of corresponding standardized APIs; and each of the standardized APIs is configured to be correspondingly embedded into a corresponding function layer in the conversion module.

The conversion module includes a plurality of first function layers and a first API layer, wherein the plurality of first function layers are configured for embedding corresponding standardized APIs to encapsulate kernel functions of the task module and the standardized APIs, and the first API layer is configured for docking each encapsulated standardized API with a corresponding second API layer in the general task interface.

The general task interface is provided in a second robot operating system and includes a second API layer and a plurality of second function layers, wherein the second API layer is correspondingly provided with the first API layer and is configured for acquiring corresponding data content from the encapsulated standardized APIs; and the plurality of second function layers are configured for forming, based on the data content, application interfaces and function implementations corresponding to the second robot operating system.

Specifically, the robot cross-platform development architecture includes a task module, a conversion module, and a general task interface.

The task module is developed in the first robot operating system and includes a series of standardized API components. These components export algorithm software designed by the user as standardized APIs based on the kernel functions of the task module. Each standardized API is embedded into a corresponding functional layer in the conversion module to implement kernel functions and encapsulation of the API.

The conversion module is composed of a plurality of first functional layers and a first API layer. The first functional layers are responsible for embedding and encapsulating the standardized APIs of the task module. The first API layer is responsible for interfacing the encapsulated APIs with the second API layer in the general task interface.

The general task interface is located in the second robot operating system and includes a second API layer and several second functional layers. The second API layer is provided corresponding to the first API layer, and receives the data content of the standardized APIs from the first API layer. The second functional layers utilize this data content to construct corresponding application interfaces and functional implementations in the second operating system.

Through the above architecture, the developed task modules can be encapsulated and adapted via the conversion module, thus achieving seamless integration and operation on the second robot operating system. This not only enhances the universality and portability of the modules, but also avoids redundant development of the same functions on different operating systems, which saves development time and resources, and strengthens compatibility and extensibility between different robot operating system platforms.

Based on the same inventive concept, the present invention further provides a robot cross-platform development method corresponding to the foregoing example of software architecture, including:
acquiring algorithm software designed by a user, wherein the algorithm software is algorithm software based on a first robot operating system for implementing robot motion control;
exporting corresponding first data from the algorithm software through any one of the robot cross-platform development architectures applied to the side of a first robot operating system;
converting the first data into corresponding second data through the conversion module in the robot cross-platform development architecture;
importing the second data into a general task interface in any one of the robot cross-platform development architectures above, so that the algorithm software operates in a second robot operating system.

It should be noted that reference can be made to the above-described embodiments of the robot cross-platform development architecture for the functional partitioning and implementation of each module in the robot cross-platform development method, which will not be further described herein.

Based on the same inventive concept, the present invention further provides a robot operating system, including: the task module in the robot cross-platform development architectures, or the general task interface in the robot cross-platform development architectures.

Preferably, the robot operating system further includes: the conversion module in the robot cross-platform development architectures.

The present invention provides a cross-platform development architecture including a modular development approach that comprises the series of API implementation logic within the module, including a conversion tool for converting the module for use on other platforms, and including a general interface definition framework for the newly generated module on other platforms.

The same or similar parts among the embodiments in the present invention can refer to each other, and each embodiment mainly describes differences from other embodiments. In particular, for the embodiments described later, the description is relatively simple, and relevant aspects may refer to the relevant parts of the foregoing embodiments.

The above is only a specific embodiment of the present invention, but the scope of protection of the present invention is not limited thereto. Any person skilled in the art can easily envisage changes or substitutions within the technical scope disclosed in the present invention, which should be encompassed within the scope of protection of the present invention. Therefore, the scope of protection of the present invention shall be stated to be subject to the scope of protection of the claims.

## Claims

1. A robot cross-platform development architecture, **characterized in that**, the robot cross-platform development architecture is applied to one side of a first robot operating system, and the robot cross-platform development architecture comprises: a task module provided in the first robot operating system; the task module comprises a series of standardized API components; and the series of standardized API components are configured for, according to a kernel function of the task module, exporting algorithm software designed by a user as a plurality of corresponding standardized APIs, wherein each of the standardized APIs is configured to be correspondingly embedded into a corresponding function layer in a conversion module, so as to be encapsulated through the conversion module into API data capable of being used by a general task interface in a second robot operating system.

2. The robot cross-platform development architecture according to claim 1, wherein the task module further comprises a logic determination unit and a register unit; and the logic determination unit is configured for, before the series of standardized API components export the standardized APIs, determining a type of an API currently being called, and placing the called API into the register unit, so that a kernel performs internal matching based on the APIs stored in the register and executes a corresponding API content call.

3. The robot cross-platform development architecture according to claim 2, wherein the task module further comprises a numbering unit, the numbering unit is configured for numbering each API to be exported, so as to mark a priority level of the API through the numbering, wherein the priority level is divided into a high priority level and a low priority level, the high priority level marks API calls sensitive to real-time performance and having high real-time requirements, and the low priority level marks API calls having low real-time requirements; and the logic determination unit, after determining the type of the API, places a number corresponding to the API into the register unit, so that the kernel performs the internal matching through the number in the register.

4. The robot cross-platform development architecture according to claim 3, wherein the register unit comprises a first register group and a second register group, the first register group is configured for storing numbers of APIs with the high priority level, the second register group is configured for storing numbers of APIs with the low priority level; when the first register group stores numbers of APIs with the high priority level, an interrupt mode is used to trigger the kernel to preferentially perform the internal matching processing; and when the second register group stores numbers of APIs with the low priority level, the kernel performs the internal matching processing in a query mode.

5. The robot cross-platform development architecture according to claim 1, wherein the plurality of standardized APIs comprise at least one or more of the following APIs: a data transmission API, a page jump API, an authority control API, and a call channel API.

6. The robot cross-platform development architecture according to any one of claims 1 to 5, wherein the first robot operating system comprises a SAGE-OS robot operating system.

7. A robot cross-platform development architecture, wherein the robot cross-platform development architecture comprises: a conversion module, wherein the conversion module comprises a plurality of first function layers and a first API layer, each of the first function layers is configured for embedding a corresponding standardized API to encapsulate the standardized API; the standardized API is an API exported by a task module of a first robot operating system according to a kernel function based on algorithm software designed by a user; and the first API layer is configured for docking each encapsulated standardized API with a general task interface, wherein the general task interface is located in a second robot operating system and is provided with a second API layer for docking, and the second API layer is correspondingly provided with the first API layer.

8. The robot cross-platform development architecture according to claim 7, wherein the first API layer interacts and docks with a general task interface in a data stack manner.

9. The robot cross-platform development architecture according to claim 8, wherein the first API layer comprises one or more data stacks for data interaction: a data channel stack, an interaction protocol stack, a network protocol stack, and a hardware abstraction stack.

10. The robot cross-platform development architecture according to claim 7, wherein the plurality of first function layers comprise:
a platform abstraction layer, configured for abstractly describing a hardware platform on which the second robot operating system is located;
a network layer, configured for describing a network protocol stack for data exchange;
a protocol layer, configured for describing interaction network protocols related to the second robot operating system; and
a service layer, configured as a data channel, wherein
each of the first function layers is configured for correspondingly embedding one of corresponding standardized APIs, to realize a kernel function of the task module and adaptive encapsulation of the APIs, so that each of the standardized APIs is represented as data of a corresponding function layer based on data interaction.

11. The robot cross-platform development architecture according to any one of claims 7 to 10, wherein the conversion module further comprises a clock management unit and a register management unit, the clock management unit is configured for unifying a clock pace of docking between the first API layer and the general task interface, and the register management unit is configured for, under control of the clock management unit, completing a bidirectional transmission of docking between the first API layer and the general task interface.

12. A robot cross-platform development architecture, applied to a second robot operating system, wherein the robot cross-platform development architecture comprises: a general task interface provided in the second robot operating system, and the general task interface comprises a second API layer and a plurality of second function layers; the second API layer is correspondingly provided with a first API layer of a conversion module and is configured for acquiring a corresponding descriptive data content from the corresponding first API layer; and the plurality of second function layers are configured for forming, based on the descriptive data content, application interfaces and function implementations corresponding to a kernel in the second robot operating system.

13. The robot cross-platform development architecture according to claim 12, wherein the plurality of second function layers comprise:
an operating system time management layer, configured for acquiring time data of a current operating system and for managing time data of the first API layer in the conversion module;
an operating system application data layer, configured for interacting, at runtime, with application data corresponding to the first API layer in the conversion module;
an operating system thread management layer, configured for performing a thread management function corresponding to execution and invocation of the first API layer in the conversion module;
an operating system abstraction layer, configured for registering functions of the operating system layer into a corresponding first API layer of the conversion module, so that the corresponding first API layer of the conversion module is able to access the second robot operating system and kernel resources of the second robot operating system; and
a platform hardware abstraction layer, configured for adapting the corresponding first API layer of the conversion module to a hardware platform of the second robot operating system.

14. The robot cross-platform development architecture according to claim 12, wherein the general task interface further comprises a general clock management unit, configured for performing clock management control on all module calling tasks by adopting a queued clock management manner; and/or
the general task interface further comprises a dedicated clock management unit, configured for performing clock management control on module calling tasks with a high priority requirement, a high real-time requirement, or a large data flow data interaction volume by adopting a dedicated clock management manner, and performing clock management control on module calling tasks with a low priority or a low data flow data interaction volume by adopting a queued clock management manner.

15. The robot cross-platform development architecture according to any one of claims 12 to 14, wherein the second robot operating system comprises an ROS robot operating system.

16. A robot cross-platform development architecture, comprising: a task module, a conversion module, and a general task interface;
the task module is provided in a first robot operating system and comprises a series of standardized API components; the series of standardized API components are configured for, according to a kernel function of the task module, exporting algorithm software designed by a user as a plurality of corresponding standardized APIs; and each of the standardized APIs is configured to be correspondingly embedded into a corresponding function layer in the conversion module;
the conversion module comprises a plurality of first function layers and a first API layer, wherein the plurality of first function layers are configured for embedding corresponding standardized APIs to encapsulate a kernel function of the task module and the standardized APIs, and the first API layer is configured for docking each of the encapsulated standardized APIs with a corresponding second API layer in a general task interface; and
the general task interface is provided in a second robot operating system and comprises a second API layer and a plurality of second function layers, wherein the second API layer is correspondingly provided with the first API layer and is configured for acquiring corresponding data content from the encapsulated standardized APIs; and the plurality of second function layers are configured for forming, based on a data content, application interfaces and function implementations corresponding to the second robot operating system.

17. A robot cross-platform development method, **characterized by** comprising:
acquiring an algorithm software designed by a user, wherein the algorithm software is an algorithm software based on a first robot operating system for implementing robot motion control;
exporting corresponding first data from the algorithm software through the robot cross-platform development architecture according to any one of claims 1 to 6;
converting the first data into corresponding second data through the robot cross-platform development architecture according to any one of claims 7 to 11; and
importing the second data into the general task interface in the robot cross-platform development architecture according to any one of claims 12 to 15, so that the algorithm software operates in a second robot operating system.

18. A robot operating system, **characterized by** comprising the task module in the robot cross-platform development architecture according to any one of claims 1 to 6, or the general task interface in the robot cross-platform development architecture according to any one of claims 12 to 15.

19. The robot operating system according to claim 18, wherein the robot operating system further comprises: the conversion module in the robot cross-platform development architecture according to any one of claims 7 to 11.
